(19) Europäisches Patentamt
European Patent Office
Office européen des brevets

(11) **EP 2 216 243 A2**

(12) **EUROPEAN PATENT APPLICATION**

(43) Date of publication:
**11.08.2010 Bulletin 2010/32**

(51) Int Cl.:
***B64C 3/14*** *(2006.01)*

(21) Application number: **10152511.1**

(22) Date of filing: **03.02.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **04.02.2009 IT TO20090065**

(71) Applicant: **Alenia Aeronautica S.p.A.**
**80038 Pomigliano D'Arco (Napoli) (IT)**

(72) Inventors:
• **Di Muzio, Massimiliano**
**10034 Chivasso (Torino) (IT)**
• **Gatti, Alfredo**
**15040 Mirabello Monferrato (Alessandria) (IT)**

(74) Representative: **Fioravanti, Corrado et al**
**Jacobacci & Partners S.p.A.**
**Corso Emilia 8**
**10152 Torino (IT)**

(54) **Supersonic laminar flow aircraft wing airfoil**

(57) The lower curve of the airfoil has a forward portion with its concavity facing a forward-lower direction and converging in the leading edge. Such a forward portion locally generates forces having a forward direction component on the wing, i.e. in the direction of advancement of the aircraft, with a consequent reduction of the overall drag on the wing.

FIG.1

**Description**

The present invention refers to a supersonic laminar flow aircraft wing airfoil.

Obtaining a laminar flow with a value greater than Mach one allows big drag reductions with consequent consumption reduction. The existence of a pressure gradient which prevents the triggering of the transition from laminar to turbulent motion is a condition which is necessary, but not sufficient, in order to establish a laminar flow. For this reason, in the past, it has been proposed to give the wings of supersonic aircrafts a cross-section having a biconvex airfoil with circular arcs. Due to its geometrical shape, a wing having a biconvex airfoil is, indeed, able to accelerate the flow on both the lower and upper surfaces of the wing, while holding down the drag component due to pressure (*pressure/wave drag*) and allowing a laminar flow to be established which reduces the drag due to friction of the air on the wing itself.

The supersonic laminar flow remains however, a theoretical concept without practical applications on supersonic aircrafts, several issues standing against the use of circular arc biconvex airfoils. The main obstacle to their use is that the camber line of an exactly biconvex airfoil is completely flat, and it is thus optimised for flying at extremely low lift coefficient conditions, otherwise, the flow tends to separate right from the - theoretically sharp - airfoil leading edge, as a result of which the performances are badly affected.

This problem, added to the very high wing loading, led designers to modify the basic circular arc biconvex thickness distribution by 1) thickening the upper contour line of the airfoil along the most fore portion of the chord, thereby locally bending down the camber line and 2) by using movable leading edge devices bile devices to increase the lift on the leading edges in order to prevent leading edge flow separation at medium to low flight speed conditions. This second modification introduces surface discontinuities where the mobile leading edge joins the fixed wing box skin on both the upper and the lower wing surfaces. These discontinuities trigger flow transitions which make it impossible to achieve in-flight supersonic laminar flow.

In the supersonic field, most design has moved away from straight and tapered wings, opting instead for wings featuring highly swept back leading edges to keep subsonic condition even above the speed of sound, thus allowing the use of more conventional airfoils. All this, in addition to the wish to exploit the increase in lift at high angles of attack generated by the vortex which forms at the leading edge of greatly swept wings, has halted any progress in supersonic straight wings, despite modern computational fluid dynamics allow 1) to better understand and define flow behaviour by computing boundary layer physical parameters in order to assess laminarity extension, and to 2) compute both friction drag as well as wave drag in order to minimize their cumulative amount.

The present invention is aimed to provide an improved wing which is suitable for supersonic cruise flight conditions, mainly facing the problem of optimising efficiency in terms of resistance to forward motion as compared to what is obtainable with current wings at supersonic cruise speeds, and at the same time displaying a laminar behaviour.

This and other objects and advantages, that shall become clearer hereafter, are achieved, according to the invention, by a wing having the features defined in the appended claims.

A few preferred, but not limiting, embodiments of the invention will now be described referring to the attached drawing, which is a diagram (not in scale) which represents different airfoils, both of the known type as well as according to the invention.

With reference to the drawing, the airfoil of a circular arc biconvex wing has the pattern indicated by the broken line A, with two circular arcs symmetrical with respect to the chord C which joins the leading edge L with the trailing edge T.

The airfoil of a wing according to the present invention has a precise geometric modification only at the lower surface, whereas the upper surface can substantially remain unchanged with respect to a conventional wing having a biconvex airfoil with circular arcs. More in particular, the novelty features reside in the most fore or forward portion of the lower surface. In the present description and in the following claims, it should be understood that terms and expressions indicating positions and directions, such as "forward" and "back" refer to the movement direction of the aircraft.

The leading edge has a transversal cross-section with an acute angle defined by the convergence of two arcs the tangents of which form an acute angle $\alpha$, preferably ranging between 1 and 10 degrees. In other words, the leading edge is a cusp point in which two arc segments both having downwardly facing concavities, intersect.

The forward and lower portion of the airfoil is a curved line which converges at the leading edge forming a segment F the curvature of which is such as to have a point of inflection P located in the forward half of the wing. In the point of inflection P, the curvature changes from concave (segment comprised between L and P) to convex (i.e., with its concavity facing upwards) in the next segment. The back half of the lower airfoil may not noticeably differ from the profile of a conventional airfoil.

The forward concave area F of the lower airfoil (segment from L to P), immediately behind the forward cusp of the leading edge, locally generates forces on the wing having a forwardly directed component, i.e., in the direction of advancement of the aircraft, with a consequent reduction of the overall drag on the wing. This effect is especially displayed at supersonic speeds, and it also occurs regardless of laminar flow conditions.

In the drawing, as an example, two different airfoils are illustrated according to the invention. The first airfoil, indicated with F1, has a concavity which extends from the leading edge up to mid chord; the concavity of the second airfoil F2, on the other hand, extends up to about the forward quarter chord.

At the leading edge, the forward lower segment of the airfoil may form a variable angle β with the chord, according to the requirements, preferably ranging between about 0 and about 5 degrees. The angle γ formed by the chord with the tangent to the lower side of the airfoil in the point of inflection P is preferably ranged between about 0 and about 10 degrees.

Experimental tests carried out by the Applicant have shown that particularly advantageous results, in terms of aerodynamic efficiency, can be achieved with an airfoil complying with the following conditions:

$$\alpha - \beta \leq 6.90 \text{ deg and } 0 \leq \gamma \leq 10 \text{ deg}$$

Excellent results have been attainted with the following combination of ranges:

$$1 \leq \alpha \leq 8.90 \text{ deg}, \ 0 \leq \beta \leq 3.50 \text{ deg and } 0 \leq \gamma \leq 10 \text{ deg}$$

It should be clear that the invention is not limited to the embodiments described and shown herein, which should be considered as illustrative embodiments of the airfoil; rather, the invention may undergo modifications relative to shapes and sizes, arrangement of parts and constructional details, as defined by the following claims.

**Claims**

1. A supersonic laminar flow aircraft wing having an airfoil **characterized in that** the lower curve has a forward portion with its concavity facing a forward-lower direction and converging in the leading edge.

2. An aircraft wing according to claim 1, **characterized in that** a tangent to the lower curve at the leading edge forms an angle (β) ranging between about 0 and about 5 degrees with the chord.

3. An aircraft wing according to claim 1 or 2, **characterised in that** the leading edge of the wing has an acute angle vertical cross section defined by said lower curve meeting the upper curve of the airfoil, wherein the lower an upper curves are arc segments having downwardly facing concavities and tangents forming an acute angle (α) at the leading edge.

4. An aircraft wing according to claim 3, **characterized in that** the angle (α) ranges between about 1 degree and about 10 degrees.

5. An aircraft wing according to any one of the preceding claims, **characterized in that** the lower curve has a point of inflection located in the forward half of the wing.

6. An aircraft wing according to claim 5, **characterized in that** the point of inflection is located in a zone between the leading edge and about mid chord.

7. An aircraft wing according to claim 5 or 6, **characterized in that** a tangent to the lower curve in the point of inflection forms an angle (γ) ranging between about 0 and about 10 degrees with the chord.

8. An aircraft wing according to any one of the preceding claims, **characterized in that** the leading edge of the wing has an acute angle vertical cross section defined by the lower curve meeting the upper curve of the wing airfoil, said curves being arc segments converging and forming a forward cusp at the leading edge.

9. An aircraft wing according to claims 2, 4 and 7, **characterized in that** $\alpha - \beta \leq 6.90$ deg and $0 \leq \gamma \leq 10$ deg.

10. An aircraft wing according to claim 9, **characterized in that**

$1 \leq \alpha \leq 8.90 \text{ deg}, \ 0 \leq \beta \leq 3.50 \text{ deg} \text{ and } 0 \leq \gamma \leq 10 \text{ deg}.$

11. Supersonic aircraft comprising a pair of wings each having an airfoil according to any one of the preceding claims.

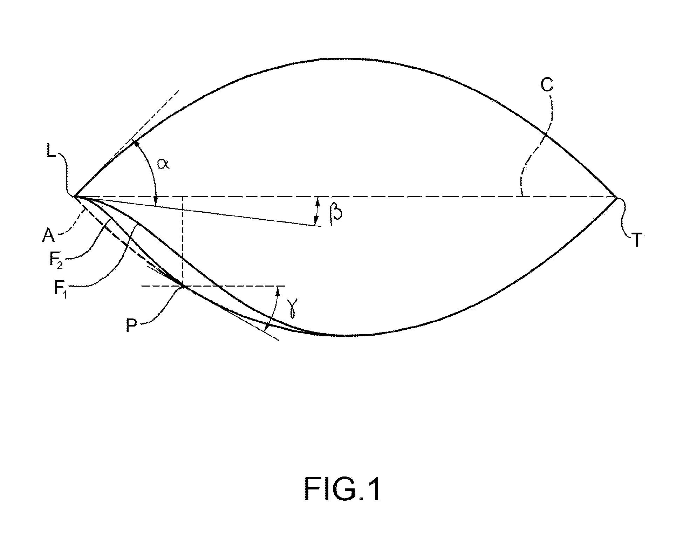

FIG.1